# EUROPEAN PATENT APPLICATION

(11) **EP 2 845 485 A1**
(43) Date of publication of application: **11.03.2015**
(21) Application number: 13784979.0
(22) Date of filing: 03.05.2013
(51) Int. Cl.: A22B 5/20, A22B 5/00

(54) **MACHINE FOR EXTRACTING THE SPINAL CORD FROM THE VERTEBRAL COLUMN OF ANIMALS**

(30) Priority: 04.05.2012 ES 201230668
(71) Applicant: Extracción de Médulas y Complementos, S.L., 17459 Campllong (Girona) (ES)
(72) Inventor: CATAFAU, Jaume, E-17459 Campllong (Girona) (ES); GONZÁLEZ, Manuel, E-17459 Campllong (Girona) (ES)
(74) Representative: Maldonado Jordan, Julia
(86) International application number: PCT/ES2013/070276
(87) International publication number: WO 2013/164510

(57) **Abstract**

The invention relates to a machine for extracting the spinal cord from the vertebral column of animals, said machine comprising: a vacuum circuit connected to a vacuum pump for the suction of the spinal cord of the animal through the lower end of the spinal canal; a compressed air circuit for introducing pressurized air through the upper end of the spinal canal; a housing comprising a funnel for fitting the neck of the animal therein and sucking the spinal cord of the animal into a storage container; forceps for peripherally holding the neck of the animal in relation to the funnel; a vertically movable support carrying the funnel and the forceps for holding the neck of the animal; a water supply circuit; a pistol for cleaning the spinal canal, connected to the compressed air circuit and to the water supply circuit; and a dashboard.

## Description

### Object of the invention

The invention refers, as is to be derived from the title, to a machine for extracting the spinal cord from the vertebral column of bodies of animals, specially sheep and cattle to prevent its consumption and the transmission to humans of certain diseases such as bovine spongiform encephalopathy, also known as mad cow disease.

### Field of the invention

The invention is applicable to slaughter houses and cutting plants for sheep and cattle in order to proceed to the extraction of the spinal cord of the bodies of the animals.

Upon the transmission to humans of the diseases called bovine spongiform encephalopathy due to the consumption of the spinal cord, the consumption of certain organs of cattle animals was prohibited for humans, defining these parts of the body as Risk Material. With the aim to eliminate the spinal cord of this type of animals some machines were developed, as for example the machine object of the Spanish Patent of the invention ES2195711 of the same owner of the present invention, describing a machine for extracting the spinal cord of bodies of the animals having a vacuum system and a pressurized air system, controlled from a command board and a pneumatic board, said machine including a vacuum pump connected to a container from which another conduit extends having in its end a silicone funnel to be attached to the lower part of the vertebral column of the body of the animal, that is, in the neck, having the machine as well a control lever as well as a container to store the extracted spinal cords and a container for cleaning water, having the compressed air system as main element a narrow nozzle to be introduced into the upper part of the vertebral column of the body of the animal, which corresponds to the tail, and which by means of a push button permits to carry out strong intermittent blows which complement the effect of the vacuum and contribute to the extraction of the spinal cord.

### Background of the invention

The above mentioned machine shows some limitations as to the capacity to eliminate the Risk Material from the marrow channel of the animal, as said extraction is carried out exclusively by means of the combination of a vacuum system and a compressed air system.

Obviously, the pressure of the air to be introduced into the marrow channel does not guarantee the elimination of marrow particles which could remain adhered to said marrow channel.

Another drawback of said machine is the difficulty to stabilize the position of the body of the animal hanging from a transport chain, to permit the correct introduction and handling of the conduits of the vacuum system and compressed air system trough the marrow channel of the body of the animal, which requires at least the intervention of two operators.

It is to be mentioned that both the machine of ES 2195711 as the machine of the present invention perform the extraction of the spinal cord having access to the marrow channel from the back and front ends of the vertebral column, that is by the upper and lower ends of the vertebral column, as the elimination or the extraction of the spinal cord is carried out when the body of the animal is hung by its hind legs from a transport chain in the slaughter house.

The elimination of the spinal cord along the marrow channel does not permit the visualization of the inside part of the same, for which reason it is necessary to guarantee as best as possible the total elimination of the spinal cord during the process of extraction of the same, which is specially difficult in the case of using the above mentioned machines which only use the action of vacuum and pressurized air.

### Description of the invention

The machine for extracting the spinal cord from the vertebral column of the bodies of the animals which is the object of this invention has constructive peculiarities which are aimed at guaranteeing a better cleaning of the marrow channel combining the application of vacuum and pressurised air with the introduction of water within the marrow channel.

Another of the objectives of the invention is to incorporate a separator in the vacuum and blowing system to eliminate residues by means of a filtration operation preventing that said eventual residues may be transferred from the body of an animal to the next, provoking its contamination.

Another of the objectives of the invention is to improve the fixation of the body of the animal during the extraction of the marrow, so that this extraction operation may be carried out by a sole operator.

Another of the objectives of the invention is to provide the machine with a control board and sensors to detect that the extraction of a spinal cord has been completed and a double sensor to determine the level of the Risk Material in the container for extracted spinal cords, ensuring the needed, unloading operations of said container, providing a higher safety.

Another of the objectives of the invention is to provide the container to store the spinal cords with a separator for liquids and solids, connected to said container to prevent the possibility that the spinal cords or water may enter the vacuum pump aimed to apply suction to the lower end of the marrow channel of the bodies of the animals to carry out the extraction of the spinal cords.

Another of the objectives of the invention is to provide the automation and simplification of the process of extraction of the spinal cords from the bodies of the animals.

The machine for extracting the spinal cord from the vertebral column of the bodies of animals which is object of this invention is of the type having a vacuum circuit connected to a vacuum pump for the suction of the spinal cord from the body of the animals trough the upper end of the marrow channel and a pressurized air circuit for the introduction of pressurized air trough the upper end of the marrow channel of the body of the animal.

According to the invention, said machine has a casing with a funnel for the introduction of the neck of the body of the animal and to proceed to the suction of the spinal cord towards the internal part of a storage container to which the vacuum circuit is connected. The vacuum produced in the internal part of the storage container determines the suction of the spinal cord of the body of the animal towards the internal part of said container when the neck of the animal is fitted within the above mentioned funnel which is arranged in the upper part of the casing of the machine.

The machine has around the funnel a perimetric clamp for holding the neck of the body of the animal in respect to the funnel and a vertically displaceable support holding the funnel and the clamp for holding the neck of the animal, as above mentioned. The descent of this support forces the marrow channel to be vertically positioned, which facilitates the extraction operation.

One of the relevant features of the invention consists in that the machine has a circuit for feeding water together with a cleaning pistol for the marrow channel, which is connected to the pressurised air and to the water circuit, so permitting the introduction of air, water or an air and water mix into the end of the marrow channel, to carry out an effective cleaning of said marrow channel and the elimination of the Risk Material contained in the same.

The machine has a control board for the control of its operation, and particularly of the means associated to the electric and air circuits related to the vacuum and pressurized air circuits and water feeding circuits.

According to the invention, the container for the storage of the extracted spinal cords of the bodies of the animals has a double sensor to detect the level, with the purpose to ensure the unloading of the Risk Materials contained inside the container, preventing the overflow of the material from the storage container and the suction level of the vacuum pump connected to said container to be reached.

To ensure a higher safety and to prevent the possibility that the spinal cords or the water contained within said container to be introduced into the vacuum pump it has been provided that said storage container is connected to a separator device for liquids and solids.

To prevent eventual contaminations in the air circuits it has been provided that the machine has at least a separator device with the necessary means for the filtering out the residues. For the proper working of the invention it is needed that the machine may be connected to a vacuum pump with the specified features with its corresponding separating device for liquids and solids and a container for storing the Risk Materials. These elements may be located outside the machine.

The machine has an additional sensor for the extraction of the spinal cord. At the same time, it has been foreseen that the vacuum pump has a power of 300 HP or higher with the aim to ensure the extraction of the spinal cord preventing, any residues to remain inside of the marrow channel.

### Description of the drawings

To complement the description of the invention and for the better understanding of the same, a set of drawings is attached which in a non limitative way represents as follows:
Figure 1 shows a diagrammatic perspective view of an example of embodiment of the machine according to the invention.

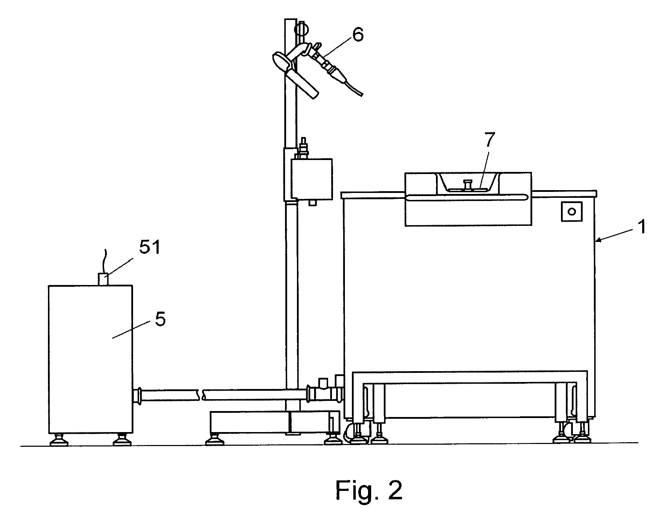

Figure 2 shows an elevation view of the machine in figure 1 connected to an external container for the storage of the spinal cords extracted from the bodies of the animals.
Figure 3 shows a side view of the machine of previous figure, without the external storage container, in which the outlets may be seen for the connection of the storage container and other various supplies.
Figure 4 shows a diagrammatic perspective view of the clamp for holding the neck of the body of the animal retained under the funnel.
Figure 5 shows a perspective view of the support located within the body of the machine which has the function to vertically displace the funnel and holding clamp to be adapted to the height and to the size of the neck of the body of the animal.

### Preferred embodiment of the invention

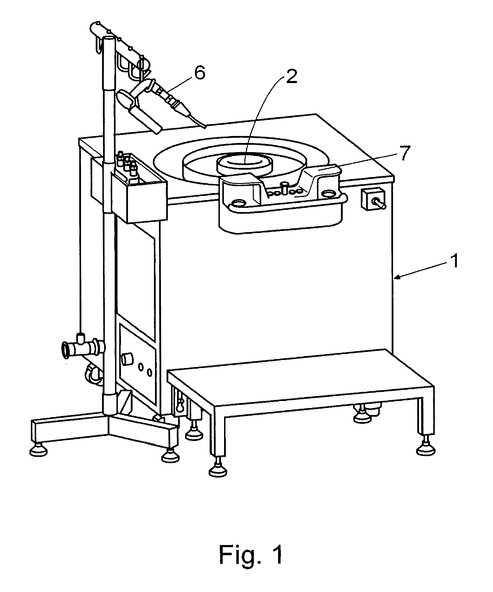

As is to be observed in figure 1, the machine of the invention has a casing (1) with an upper funnel (2) for the introduction of the neck of the body of the animal once slaughtered, while said animal body is suspended from a chain or a similar transport element in the slaughter house.

Under the funnel (2) a clamp (3) is located for perimetrically holding the neck of the body of the animal in respect to the funnel (2).

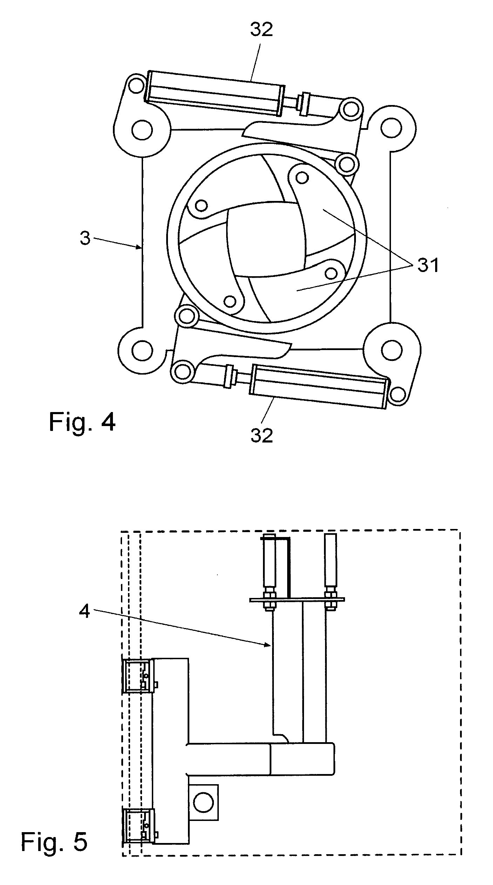

In the example which has been shown in figure 4, the clamp (3) has articulated jaws (31), located perimetrically and connected to operating cylinders (32); said jaws (31) performing the opening and closing in a perimetric pattern of an aperture plate.

The funnel (2) and the clamp (3) for holding the neck of the body of the animal are assembled on a support (4) located within the body of the machine, having the purpose to vertically displace the funnel and the holding clamp to be adapted to the size of the neck and height of the body of the animal.

The funnel (2) is internally connected to a vacuum circuit - not shown - for the suction of the spinal cord from the lower end of the marrow channel of the animal and its conduction to the storage container (5), which is externally located, being connected to the opening (11) of the machine and having double sensor (51) to detect the level in order to provoke its automatic emptying and a separator for liquids and solids to prevent the entry of the stored product into the circuit of the vacuum pump. A vacuum pump has been foreseen connected to said vacuum circuit, with a power of 300 HP or higher.

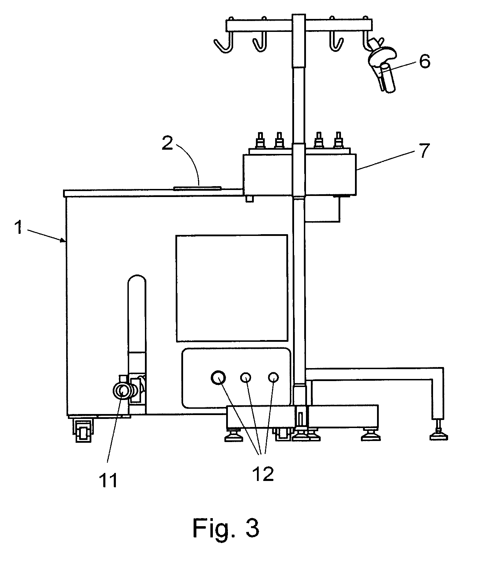

As may be observed in the figure 3, the machine has apart from the opening (11) for the connection to the external storage container (5), some openings (12), for the connection of various supplies, such as a vacuum circuit, pressurised air supply, water and electric supply.

The machine has a control board (7) to control is operation.

The machine has a pistol (6) for cleaning the marrow channel which is connected to a pressurised air circuit and to a water feeding circuit. Said pistol (6) permits to introduce into the upper end of the marrow channel air or water, or a mix of air and water, with the purpose to carry out the cleaning of said marrow channel and the extraction of the spinal cord with the assistance of the suction applied by the vacuum circuit to the lower end of said marrow channel.

Once sufficiently described the nature of the invention as well as an example of a preferred embodiment, it is stated to all effects that the materials, shape, size and arrangement of the described elements may by modified whenever this does not mean an alteration of the essential characteristics of the invention which is claimed as follows.

## Claims

1. Machine for extracting the spinal cord from the vertebral column of the bodies of animals, of the type which has a vacuum circuit connected to a vacuum pump, for the suction of the spinal cord from the body of the animal trough the lower end of the marrow channel and having a circuit for pressurized air for the introduction of pressurised air trough the upper end of the marrow channel, **characterized in that** the machine has a casing with a funnel for the introduction of the neck of the body of the animal and for the suction of the spinal cord of the body of the animal towards the internal part of a storage container, with the assistance of the suction exerted in the lower end of the marrow channel by the vacuum device; the machine having a clamp for the perimetric holding of the neck of the body of the animal in respect to the funnel; a vertically displaceable support for holding the funnel and the clamp for retaining the neck of the body of the animal; a water supply circuit, a cleaning pistol for the marrow channel connected to the pressurised circuit and a water feeding circuit, as well as a control board for the control of the operation of the machine.

2. Machine, according to claim 1, **characterized in that** the storage container of the extracted spinal cords has a double level sensor.

3. Machine, according to any of the previous claims, **characterized by** having a separator device with filtration means to separate the residues from the pressurised air circuit.

4. Machine, according to claim 2, **characterized in that** it has a sensor to control the extraction of the spinal cord.

5. Machine, according to any of the previous claims, **characterized in that** the vacuum pump has a power of 300 HP or higher.
